# EUROPEAN PATENT APPLICATION

(11) **EP 4 628 950 A1**
(43) Date of publication of application: **08.10.2025**
(21) Application number: 23897789.6
(22) Date of filing: 28.11.2023
(51) Int. Cl.: G02B 6/02

(54) **FIBER BRAGG GRATING ELEMENT AND METHOD FOR PRODUCING SAME**

(30) Priority: 29.11.2022 JP 2022190406
(71) Applicant: WASEDA UNIVERSITY, Shinjuku-ku Tokyo 169-8050 (JP)
(72) Inventor: AOKI, Takao, Tokyo 169-8050 (JP)
(74) Representative: Strehl & Partner mbB
(86) International application number: PCT/JP2023/042609
(87) International publication number: WO 2024/117141

(57) **Abstract**

The present invention provides a fiber Bragg grating element in which a fiber Bragg grating with reduced optical power loss is formed in a narrow-diameter region, and a method for producing the same. A starting fiber 31 in which a core 21 and a cladding 22 are made of silica-based glass containing a photosensitive material is prepared. Ge (germanium) for increasing a refractive index is used as the photosensitive material, and a concentration of the photosensitive material in the core 21 is set to be higher than a concentration in the cladding 22, and thus the starting fiber 31 in which a refractive index of the core 21 is greater than a refractive index of the cladding 22 is heated and stretched to produce a tapered optical fiber 11. A narrow-diameter region 12 of the tapered optical fiber 11 is irradiated with ultraviolet rays by a phase mask method to form periodic refractive index modulation in the core 21 and the cladding 22.

## Description

### Technical Field

The present invention relates to a fiber Bragg grating element and a method for producing the same.

### Background Art

A fiber Bragg grating element is known in which a fiber Bragg grating whose refractive index periodically changes is formed in a core of an optical fiber. The fiber Bragg grating is produced by, for example, irradiating an optical fiber having a core containing a photosensitive material with interference light of an ultraviolet laser so that interference fringes are generated on a partial region of the optical fiber, and changing a refractive index of the core with an interference fringe pattern.

A tapered optical fiber is known in which a narrow-diameter region called a nano-optical fiber is formed. In this tapered optical fiber, for example, the narrow-diameter region is formed in which a part of an optical fiber having a normal diameter (for example, 100 µm or more) is heated and stretched to reduce the diameter to submicron. In addition, in the tapered optical fiber, a transition region in which the diameter continuously decreases toward the narrow-diameter region is formed between a region having a normal diameter and the narrow-diameter region (for example, see Patent Literature 1). In the narrow-diameter region, the entire tapered optical fiber, that is, a core and a cladding, functions as a core for propagating light, and the atmosphere or a vacuum space outside the narrow-diameter region functions as a cladding. Since the tapered optical fiber has a strong light confinement effect and a large evanescent field, the tapered optical fiber is used in the fields of light engineering and quantum optics.

It is known that a fiber Bragg grating is formed in the narrow-diameter region of the tapered optical fiber as described above (see Non-Patent Literature 1). In Non-Patent Literature 1, +1st order diffracted light and -1st order diffracted light obtained by diffracting laser light with a spectroscopic element interfere with each other on a narrow-diameter region, and the narrow-diameter region is ablated using an interference fringe pattern, so that a plurality of concave portions are periodically arranged and formed in the narrow-diameter region, and these portions function as a fiber Bragg grating.

### Citation List

### Patent Literature

Patent Literature 1: JP2016-153850A

### Non-Patent Literature

Non-Patent Literature 1: K. P. Nayak and K. Hakuta, "Photonic crystal formation on optical nanofibers using femtosecond laser ablation technique" Vol.21, Issue 2, pp.2480-2490 (2013)

### Summary of Invention

### Technical Problem

In the configuration in which the concave portions are provided in the narrow-diameter region as in the fiber Bragg grating described in Non-Patent Literature 1, there is a problem that power loss due to scattering of light caused by the concave portions is large.

The present invention has been made in view of the above circumstances, and an object of the present invention is to provide a fiber Bragg grating element in which a fiber Bragg grating with reduced optical power loss is formed in a narrow-diameter region, and a method for producing the same.

### Solution to Problem

The present invention provides a method for producing a fiber Bragg grating element, the method including: a preparation step of preparing an optical fiber having a layer structure including a core and one or more outer peripheral layers that is made of a transparent optical material and that includes a cladding surrounding the core and having a refractive index less than a refractive index of the core, at least one outer peripheral layer of the one or more outer peripheral layers containing a photosensitive material; a stretching step of heating and stretching the optical fiber to form a narrow-diameter region having a reduced diameter and a pair of transition regions at both ends of the narrow-diameter region, a diameter of which gradually increases continuously from the narrow-diameter region; and an exposure step of irradiating a part of the narrow-diameter region with light to cause a photoinduced refractive index change and to form a fiber Bragg grating in which a refractive index of the outer peripheral layer containing the photosensitive material periodically changes.

The present invention provides a method for producing a fiber Bragg grating element, the method including: a preparation step of preparing an optical fiber having a layer structure that includes a core and a cladding surrounding the core and having a refractive index less than a refractive index of the core, the core and the cladding each containing a photosensitive material; a stretching step of heating and stretching the optical fiber to form a narrow-diameter region having a reduced diameter and a pair of transition regions at both ends of the narrow-diameter region, a diameter of which gradually increases continuously from the narrow-diameter region; and an exposure step of irradiating a part of the narrow-diameter region with light to cause a photoinduced refractive index change and to form a fiber Bragg grating in which a refractive index of the cladding periodically changes together with the core.

The present invention provides a fiber Bragg grating element including: a tapered optical fiber having a layer structure including a core and one or more outer peripheral layers that is made of an optical material and that includes a cladding surrounding the core and having a refractive index less than a refractive index of the core, at least one outer peripheral layer of the one or more outer peripheral layers containing a photosensitive material, and a narrow-diameter region being integrally provided at one end of a transition region in which a diameter continuously and gradually decreases; and a fiber Bragg grating formed in the narrow-diameter region and having a periodical change in refractive index of the outer peripheral layer containing the photosensitive material.

The present invention provides a fiber Bragg grating element including: a tapered optical fiber having a layer structure that includes a core and a cladding surrounding the core and having a refractive index less than a refractive index of the core, the core and the cladding each being made of an optical material containing a photosensitive material, and a narrow-diameter region being integrally provided at one end of a transition region in which a diameter continuously and gradually decreases; and a fiber Bragg grating formed in the narrow-diameter region and having a periodical change in refractive index of the cladding together with the core.

### Advantageous Effects of Invention

According to the present invention, since the fiber Bragg grating in which the refractive index of the cladding periodically changes together with the core is formed by irradiating, with interference light, the narrow-diameter region formed by heating and stretching the optical fiber in which at least one outer peripheral layer of one or more outer peripheral layers including the cladding contains the photosensitive material, it is possible to easily produce the fiber Bragg grating element with reduced optical power loss. Further, the fiber Bragg grating element produced in this manner can reduce optical power loss.

According to the present invention, since the fiber Bragg grating in which the refractive index of the cladding periodically changes together with the core is formed by irradiating, with the interference light, the narrow-diameter region formed by heating and stretching the optical fiber containing the photosensitive material in the core and the cladding, it is possible to easily produce the fiber Bragg grating element with reduced optical power loss. Further, the fiber Bragg grating element produced in this manner can reduce optical power loss.

### Brief Description of Drawings

Fig. 1 is a cross-sectional view illustrating a fiber Bragg grating element according to an embodiment.
Fig. 2 is an explanatory diagram schematically illustrating a fiber Bragg grating formed in a narrow-diameter region.
Fig. 3 is a flowchart illustrating a procedure for producing a fiber Bragg grating element.
Fig. 4 is an explanatory diagram illustrating a heating and stretching device for producing a tapered optical fiber.
Fig. 5 is an explanatory view illustrating an ultraviolet irradiation state by a phase mask method.
Fig. 6 is an explanatory diagram schematically illustrating a cross section of a tapered optical fiber having a three-layer structure.

### Description of Embodiments

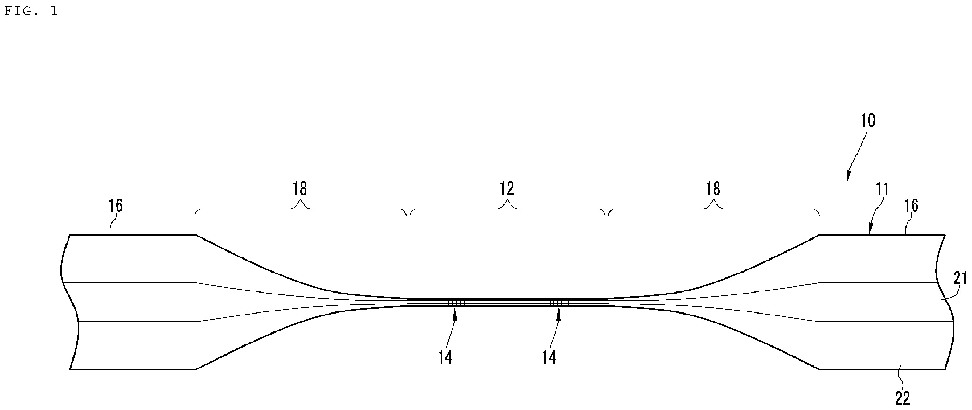

In Fig. 1, a fiber Bragg grating element 10 has a fiber Bragg grating 14 formed in a narrow-diameter region 12 of a tapered optical fiber 11. The tapered optical fiber 11 includes the narrow-diameter region 12, an optical fiber region 16, and a transition region 18. In this example, the optical fiber regions 16 are integrally formed at both ends of the narrow-diameter region 12 via transition regions 18. For example, the optical fiber region 16 is used to make light incident on the narrow-diameter region 12 and to emit and propagate light from the narrow-diameter region 12.

The fiber Bragg grating 14 reflects light of a specific wavelength of the propagating light. In this example, a pair of fiber Bragg gratings 14 having the same characteristics are provided at a predetermined interval in the narrow-diameter region 12, and the fiber Bragg grating element 10 constitutes a micro-optical resonator. That is, the pair of fiber Bragg gratings 14 are Fabry-Perot microresonators that form a standing wave by repeatedly reflecting the light of a specific wavelength therebetween.

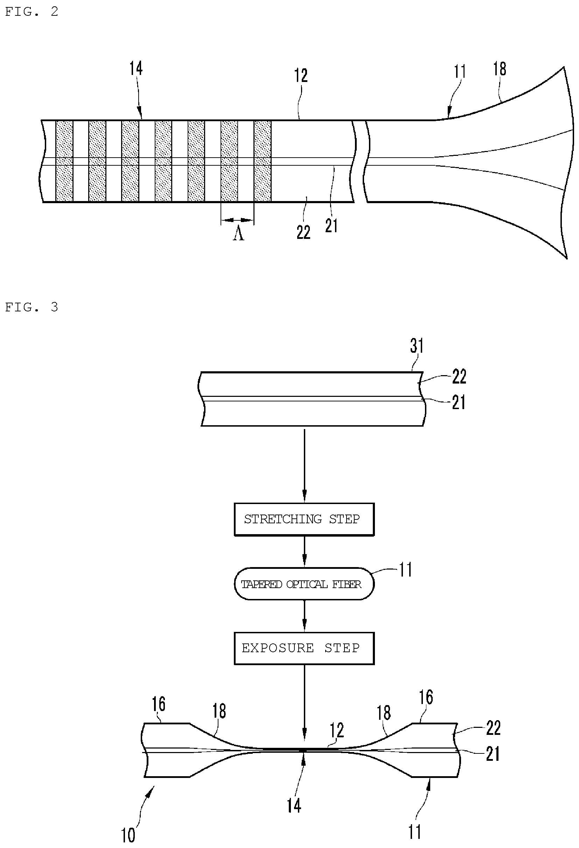

Each portion of the tapered optical fiber 11 has a circular cross section orthogonal to an axial direction (light propagation direction, that is, left-right direction in Fig. 1), and has a layer structure in which a core 21 is disposed at a center and a cladding 22 surrounds the core 21. The tapered optical fiber 11, that is, the core 21 and the cladding 22, is made of silica-based glass made by adding a photosensitive material to quartz glass. The core 21 and the cladding 22 are continuous in the axial direction of the tapered optical fiber 11. A refractive index of the core 21 is greater than a refractive index of the cladding 22. In this example, the cladding 22 is an outer peripheral layer, and a single layer of cladding 22 constitutes an outer peripheral layer portion. In Fig. 1, a diameter of the core 21 relative to a diameter of the cladding 22 is exaggerated, and hatching is omitted to avoid complication of the drawing. The same applies to Figs. 2 and 3. In this example, the tapered optical fiber 11 is made of silica-based glass as an optical material, but the optical material may be a plastic optical fiber or a fluoride glass optical fiber.

As will be described in detail later, the narrow-diameter region 12 and the transition region 18 are produced by heating (softening) and stretching a part of an optical fiber having a structure similar to that of a general single-mode optical fiber used for optical communication or the like. In this way, the optical fiber used to form the tapered optical fiber 11 is not limited to the single-mode type optical fiber, and may be a multimode type optical fiber such as a step index (SI) type or a graded index (GI) type, a polarization-maintaining optical fiber, or the like. The optical fiber region 16 can have the same structure as the optical fiber used. In the tapered optical fiber 11, each of the core 21 and the cladding 22 contains a photosensitive material, but the refractive index of the core 21 is greater than the refractive index of the cladding 22 as described above.

An outer diameter of the optical fiber region 16 (outer diameter of the cladding 22) and a diameter of the core 21 are the same as those of the general single-mode optical fiber. For example, the outer diameter of the optical fiber region 16 is about 125 µm, and the diameter of the core 21 is about several µm.

An outer diameter of the narrow-diameter region 12 is smaller than that of the optical fiber region 16 and is, for example, equal to or smaller than a wavelength of propagating light. A wavelength of light propagating through the tapered optical fiber 11 is not particularly limited. For example, when the tapered optical fiber 11 is made of silica-based glass, the wavelength may be in a range of 400 nm to 2000 nm that is commonly utilized in the optical fiber made of silica-based glass. A ratio between the diameter of the core 21 and the outer diameter of the cladding 22 in each of the narrow-diameter region 12 and the transition region 18 is the same as that in the optical fiber region 16. Therefore, the diameter of the core 21 in the narrow-diameter region 12 is approximately several nm. In the narrow-diameter region 12 having such a reduced diameter, the entire narrow-diameter region 12, that is, the core 21 and the cladding 22, functions as a core, and a space (gas, vacuum, or liquid) around the narrow-diameter region 12 functions as a cladding to propagate light.

The transition region 18 has a shape in which the diameter continuously and gradually decreases from the optical fiber region 16 toward the narrow-diameter region 12, that is, a tapered shape that narrows from the optical fiber region 16 toward the narrow-diameter region 12. The transition region 18 reduces optical loss when light propagates between the optical fiber region 16 and the narrow-diameter region 12. The transition region 18 preferably has a shape that satisfies a thermal insulating condition in which the loss due to coupling between a fundamental mode and a higher-order mode is sufficiently small.

In Fig. 2, the fiber Bragg grating 14 provided in the narrow-diameter region 12 is formed as a refractive index modulation region in which the refractive index varies (increases or decreases) at a predetermined period in the axial direction in the core 21 and the cladding 22. As described above, in the narrow-diameter region 12, the entire narrow-diameter region 12, that is, the core 21 and the cladding 22, functions as a core, but in the fiber Bragg grating 14, periodic refractive index modulation is formed in the core 21 and the cladding 22, and thus a refractive index of light propagating through the narrow-diameter region 12 is effectively modulated. Therefore, the light propagating through the narrow-diameter region 12 is reflected by the fiber Bragg grating 14 at a specific wavelength corresponding thereto. At this time, since the fiber Bragg grating 14 is realized by the refractive index modulation of the core 21 and the cladding 22, there is no scattering of light as in a case where a concave portion is formed in the narrow-diameter region 12, and power loss is small.

The fiber Bragg grating 14 is formed using a photoinduced refractive index change caused by irradiation of ultraviolet rays to the core 21 and the cladding 22 containing the photosensitive material, as described below. When the wavelength (Bragg wavelength) to be reflected by the fiber Bragg grating 14 is denoted as λ_{b}, the fiber Bragg grating 14 is formed such that an effective refractive index n_{eff} of the narrow-diameter region 12 and a modulation period ∧ of a refractive index satisfy "λ_{b} = 2n_{eff} · A". In this example, the ultraviolet rays are used as light for inducing a photoinduced refractive index change, but the present invention is not limited thereto. For example, when a photoinduced refractive index change using a photon absorption process of two or more photons, such as a two-photon absorption process, is used, light having a wavelength longer than that of the ultraviolet rays can be used.

A producing procedure of the fiber Bragg grating element 10 will be described. As illustrated in Fig. 3, an optical fiber (hereinafter referred to as a starting fiber) 31 including a photosensitive material in the core 21 and the cladding 22 is prepared (preparation step), and the fiber Bragg grating element 10 is produced from the starting fiber 31. More specifically, the starting fiber 31 is heated and stretched by a stretching step to produce the tapered optical fiber 11, and the fiber Bragg grating 14 is formed in the narrow-diameter region 12 of the tapered optical fiber 11 by an exposure step using the photoinduced refractive index change.

A part of the starting fiber 31 remains as the optical fiber region 16, and another part of the starting fiber 31 is stretched to form the narrow-diameter region 12 and the transition region 18. Therefore, the starting fiber 31 has a two-layer structure including the core 21 and the cladding 22, and the core 21 and the cladding 22 contain a photosensitive material. In the starting fiber 31, the core 21 and the cladding 22 are made of silica-based glass made by adding a photosensitive material to quartz glass. Further, the diameter of the core 21 of the starting fiber 31 and an outer diameter of the starting fiber 31 (cladding 22) are the same as those of the optical fiber region 16. The starting fiber 31 is the same as a general single-mode optical fiber except that the core 21 and the cladding 22 contain a photosensitive material.

In this example, the core 21 and the cladding 22 of the starting fiber 31 contain the same photosensitive material, and refractive indexes of the core 21 and the cladding 22 are controlled by the photosensitive material. As the photosensitive material, germanium (Ge) is used, which increases the refractive index when added. Therefore, both the core 21 and the cladding 22 have a higher refractive index than the case where both are made of pure quartz. The reason why the photosensitive material is contained not only in the core 21 but also in the cladding 22 is to induce a photoinduced refractive index change not only in the core 21 but also in the cladding 22 to form refractive index modulation as described above in the narrow-diameter region 12.

In the starting fiber 31, the refractive index of the core 21 is made greater than the refractive index of the cladding 22 so that light propagates, similarly to a normal optical fiber, by providing a difference in concentration of the photosensitive material in the core 21 and the cladding 22. Therefore, in this example, a concentration of Ge in the core 21 is higher than a concentration of Ge in the cladding 22.

The photosensitive material is not limited to Ge as long as a material provides photosensitivity, that is, induces a photoinduced refractive index change. In addition, the photosensitive material may be a photosensitive material that decreases the refractive index when added. Examples of the photosensitive material that decreases the refractive index when added include boron (B) and fluorine (F). A plurality of types of photosensitive materials may be added to the core 21 and the cladding 22. For example, B and Ge may be added together as the photosensitive material. In this case, the photosensitivity can be improved as compared with the case where Ge is added alone. Furthermore, the photosensitive materials or combinations of photosensitive materials added to the core 21 and the cladding 22 may be different.

In the starting fiber 31, as long as the cladding 22 is provided with photosensitivity and the refractive index of the core 21 is greater than the refractive index of the cladding 22, it is also possible to use a photosensitive material that imparts photosensitivity without affecting the refractive index or without significantly changing the refractive index when added. Further, a refractive index control material that increases or decreases the refractive index without imparting photosensitivity when added may be used in combination with the photosensitive material. For example, the starting fiber 31 may be made by adding to the core 21 a photosensitive material that increases the refractive index when added, and adding to the cladding 22 a photosensitive material that decreases the refractive index when added. In addition, the photosensitive material may be added only to the cladding 22 so that the refractive index thereof is less than the refractive index of the core 21 when added. Further, the starting fiber 31 may be made by adding to the core 21 a photosensitive material or a refractive index control material that increases the refractive index, and adding to the cladding 22 a photosensitive material for imparting only photosensitivity without significantly changing the refractive index. As the photosensitive material and the refractive index control material, materials corresponding to the optical material of the starting fiber 31 are used.

Since the photosensitive material is added to the core 21 and the cladding 22 of the starting fiber 31 as described above, the core 21 and the cladding 22 in the narrow-diameter region 12, the optical fiber region 16, and the transition region 18 of the tapered optical fiber 11 also contain the photosensitive material similarly to the starting fiber 31.

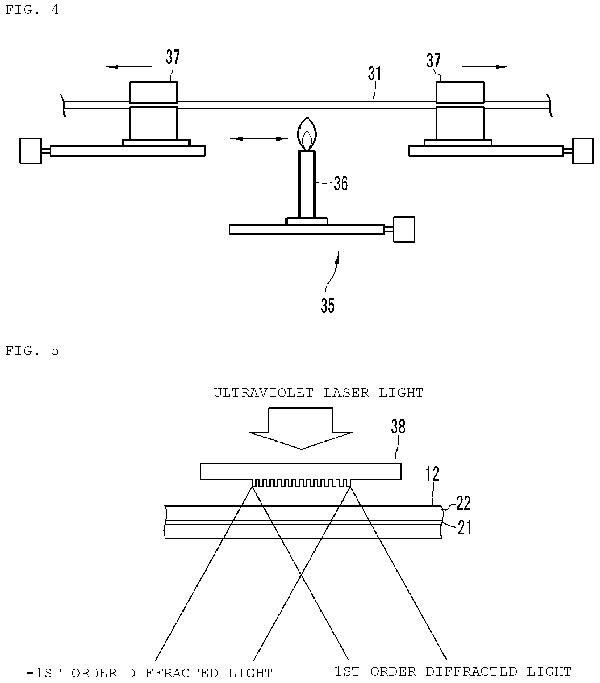

In the stretching step, for example, the narrow-diameter region 12 and the transition region 18 are formed by a frame brush method. Specifically, for example, using a heating and stretching device 35 as illustrated in Fig. 4, both ends of the starting fiber 31 are stretched in the axial direction while heating the starting fiber 31. In the heating and stretching device 35, a torch 36 as a heating unit is reciprocated along the axial direction of the starting fiber 31 to perform heating scanning for moving a heating position of the starting fiber 31. In addition, while performing this heating scanning, a pair of clamps 37, which hold both ends of the starting fiber 31 across a heating region, are moved in a direction away from each other to pull the starting fiber 31 in the axial direction, thereby stretching the portion of the starting fiber 31 softened by heating.

For example, while a moving speed of the torch 36, that is, a moving speed at the heating position is kept constant and a moving range thereof is controlled, both ends of the starting fiber 31 are pulled at a constant speed by the pair of clamps 37 to deform the heated range of the starting fiber 31, thereby forming the narrow-diameter region 12 having a desired length and thickness and a pair of transition regions 18 having a predetermined shape in which the thermal insulation condition is satisfied. Details of the method for producing the tapered optical fiber 11 by the frame brush method are described in, for example, JP2016-153850A. The method for producing the tapered optical fiber 11 from the starting fiber 31 is not limited to the frame brush method.

In the exposure step, the fiber Bragg grating 14 is formed by, for example, a phase mask method on the tapered optical fiber 11 produced in the stretching step. In the phase mask method, as illustrated in Fig. 5, the narrow-diameter region 12 of the tapered optical fiber 11 is disposed close to a phase mask 38 in which grooves are formed at a predetermined pitch (period), and in this state, the narrow-diameter region 12 is irradiated with ultraviolet laser light through the phase mask 38. Accordingly, an interference fringe is formed at the position of the narrow-diameter region 12 by causing +1st order diffracted light and -1st order diffracted light of the ultraviolet laser light diffracted by the phase mask 38 to interfere with each other, and the narrow-diameter region 12 is irradiated with the ultraviolet rays (interference light) subjected to the intensity modulation in the axial direction of the narrow-diameter region 12 at the period Λ. In this example, in order to efficiently induce a change in an optical refractive index in the narrow-diameter region 12 (cladding 22) to which Ge is added, a deep ultraviolet laser is used and laser light in a deep ultraviolet region (wavelength of 100 nm to 280 nm) is emitted to the narrow-diameter region 12 through the phase mask 38, but the wavelength of the ultraviolet rays is not limited thereto. In order to form the pair of fiber Bragg gratings 14, an irradiation position of the ultraviolet laser light on the narrow-diameter region 12 is shifted, and the ultraviolet laser light is irradiated in the same manner.

As described above, when the photoinduced refractive index change using, for example, a photon absorption process of two or more photons is utilized, laser light having a longer wavelength may be used and the laser light (interference light) may be irradiated to form the interference fringe in the narrow-diameter region 12.

Since Ge, which is a photosensitive material, is added to each of the core 21 and the cladding 22 of the narrow-diameter region 12, in each of the core 21 and the cladding 22 of the narrow-diameter region 12, the refractive index of the portion irradiated with the ultraviolet rays increases as an irradiation amount of the ultraviolet light increases due to the photoinduced refractive index change. Therefore, when the ultraviolet rays subjected to the intensity modulation as described above are irradiated, the refractive index of each of the core 21 and the cladding 22 of the narrow-diameter region 12 is modulated in accordance with the intensity modulation. Accordingly, the fiber Bragg grating 14 is formed in the narrow-diameter region 12, and the fiber Bragg grating element 10 is obtained.

In this example, the fiber Bragg grating 14 is formed by the phase mask method, but the light irradiation method is not particularly limited. For example, the refractive index modulation may be formed in the core 21 and the cladding 22 of the narrow-diameter region 12 by forming interference fringes of ultraviolet rays at the position of the narrow-diameter region 12 by a two-beam interference method. Further, as in a point-by-point method (stippling method), while the narrow-diameter region 12 is moved in a longitudinal direction thereof, the narrow-diameter region 12 may be intermittently irradiated with, for example, ultraviolet light whose beam width is narrowed by a slit or condensing lens, and a photoinduced refractive index change may be caused in the irradiated portion to form the fiber Bragg grating 14.

As described above, since the fiber Bragg grating element 10 is produced using the starting fiber 31 including the photosensitive material in the core 21 and the cladding 22, refractive index modulation can be formed in the core 21 and the cladding 22 of the narrow-diameter region 12 by the same method as in the case of forming the fiber Bragg grating in an optical fiber having a normal thickness, and the fiber Bragg grating 14 can be easily formed.

As described above, in the fiber Bragg grating 14, the refractive index of the narrow-diameter region 12 may be effectively modulated for the light propagating through the narrow-diameter region 12 that functions entirely as a core for propagating light. In the narrow-diameter region 12, since a cross-sectional area of the core 21 is considerably small, the presence or absence of refractive index modulation in the core 21 has almost no effect on the propagating light. Therefore, the tapered optical fiber 11 may be formed using the starting fiber 31 containing the photosensitive material only in the cladding 22, and the fiber Bragg grating 14 may be formed by performing the refractive index modulation only on the cladding 22 of the narrow-diameter region 12. In this case, for example, when the same optical material is used for the core 21 and the cladding 22, a photosensitive material (B, F, or the like) that decreases the refractive index may be used.

The tapered optical fiber 11 (narrow-diameter region 12, optical fiber region 16, and transition region 18) in the above example has a two-layer structure having the core 21 and the cladding 22 as the outer peripheral layer, but may have a layer structure of three or more layers. The core 21 may include a plurality of layers, and as will be described later, an outer peripheral layer portion formed of an outer peripheral layer such as the cladding may include a plurality of layers.

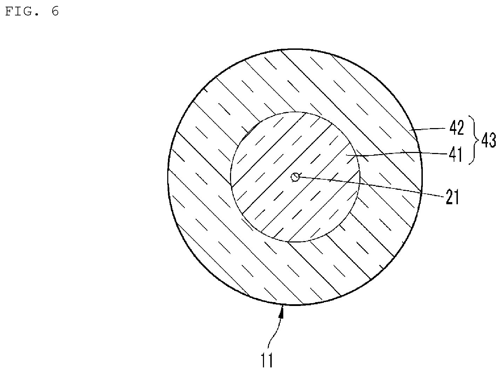

Fig. 6 illustrates an example in which the tapered optical fiber 11 has a three-layer structure. In this example, the tapered optical fiber 11 has a three-layer structure including a core 21, a first outer peripheral layer 41 provided to surround the core 21, and a second outer peripheral layer 42 provided to surround the first outer peripheral layer 41, and an outer peripheral layer portion 43 having a two-layer structure is formed by the first outer peripheral layer 41 and the second outer peripheral layer 42.

For example, the first outer peripheral layer 41 is an inner cladding having a refractive index less than the refractive index of the core 21, the second outer peripheral layer 42 is an outer cladding having a refractive index less than a refractive index of the first outer peripheral layer 41, and the tapered optical fiber 11 has the same layer structure as a double-clad type optical fiber. In the tapered optical fiber 11 having such a layer structure, assuming that only one or both of the first outer peripheral layer 41 and the second outer peripheral layer 42 contain a photosensitive material, one or both of the first outer peripheral layer 41 and the second outer peripheral layer 42 can be subjected to refractive index modulation to form the fiber Bragg grating 14.

The outer peripheral layer portion 43 only needs to have a configuration capable of confining light in the starting fiber 31 (optical fiber region 16), and a refractive index of the outer peripheral layer that does not affect the light confinement is not particularly limited in terms of being higher or lower than a refractive index of another outer peripheral layer inside the outer peripheral layer. For example, when the first outer peripheral layer 41 is a cladding that confines light, the second outer peripheral layer 42 may be a protective layer or the like made of, for example, pure quartz that does not have a function as a cladding.

The outer peripheral layer portion 43 may have a layer structure having three or more outer peripheral layers, and in the case of a layer structure having a plurality of (two or more) outer peripheral layers, one or more outer peripheral layers constituting the outer peripheral layer portion 43 may contain a photosensitive material to effectively modulate the refractive index of the narrow-diameter region 12 for the light propagating through the narrow-diameter region 12. Regardless of whether the outer peripheral layer containing the photosensitive material and modulating the refractive index is a cladding or a layer other than the cladding, one or more outer peripheral layers may be selected, or all the outer peripheral layers may be selected, and the photosensitive material may be contained in the selected one or more outer peripheral layers to modulate the refractive index. Therefore, the refractive index can be modulated by selecting only one layer or a plurality of layers of the cladding, or selecting one or more outer peripheral layers other than the cladding, and causing the selected one or more outer peripheral layers to contain photosensitive material.

For example, as described above, when the first outer peripheral layer 41 is a cladding and the second outer peripheral layer 42 is a protective layer, only the first outer peripheral layer 41 which is a cladding is selected, or only the second outer peripheral layer 42 which is a protective layer is selected, and the photosensitive material is contained only in the selected cladding or protective layer to perform the refractive index modulation. Of course, both the first outer peripheral layer 41 and the second outer peripheral layer 42 may be selected. In the outer peripheral layer portion having a three-layer structure in which the inner cladding and the outer cladding provided as the first and second outer peripheral layers, and a protective layer as a third outer peripheral layer provided to surround the outer cladding are provided, one or more outer peripheral layers are selected from the inner cladding, the outer cladding, and the protective layer, and the photosensitive material is contained in the selected outer peripheral layer to perform the refractive index modulation.

As the outer peripheral layer containing the photosensitive material, it is preferable to select an outer peripheral layer having a largest cross-sectional area ratio in the cross section orthogonal to the axial direction of the tapered optical fiber 11. In addition, as the outer peripheral layer containing the photosensitive material, it is also preferable to select one or more outer peripheral layers so that a total cross-sectional area is 50% or more.

Although the example in which a pair of fiber Bragg gratings are formed in the narrow-diameter region has been described above, a fiber Bragg grating to be formed is not limited thereto. For example, one or any number of fiber Bragg gratings can be formed in the narrow-diameter region. The fiber Bragg grating is not limited to a fiber Bragg grating in which a period of refractive index modulation is constant, and a profile of the fiber Bragg grating such as a magnitude of refractive index modulation and a period and a length of a grating is freely determined. The refractive index in the fiber Bragg grating does not need to change at a constant period, and for example, the fiber Bragg grating formed in the narrow-diameter region may be a chirped fiber Bragg grating in which the period of refractive index modulation is continuously changed in a longitudinal direction (light propagation direction) of a fiber, a phase shifted fiber Bragg grating in which a phase shifted portion is provided in a refractive index modulated region, or the like.

In addition, the fiber Bragg grating to be formed may be a uniform fiber Bragg grating having a sinusoidal distribution of a refractive index with a constant amplitude, a Gaussian apodized fiber Bragg grating, or the like. Further, for example, the micro-optical resonator can be configured by forming, in the narrow-diameter region, a chirped fiber Bragg grating having a profile in which the period of the refractive index modulation is continuously and gradually increased and then continuously and gradually decreased, or continuously and gradually decreased and then continuously and gradually increased in one longitudinal direction of the narrow-diameter region. In addition, a micro-optical resonator can be configured by forming a fiber Bragg grating having a configuration in which a period of a Bragg grating is changed only in a narrow region near a center of the grating or an amplitude of refractive index modulation in the narrow region near the center of the Bragg grating is reduced, or a combination thereof.

### Reference Sign List

- 10: fiber Bragg grating element
- 11: tapered optical fiber
- 12: narrow-diameter region
- 14: fiber Bragg grating
- 16: optical fiber region
- 18: transition region
- 21: core
- 22: cladding
- 31: starting fiber
- 41: first outer peripheral layer
- 42: second outer peripheral layer
- 43: outer peripheral layer portion

## Claims

1. A method for producing a fiber Bragg grating element, the method comprising:
a preparation step of preparing an optical fiber having a layer structure including a core and one or more outer peripheral layers that is made of a transparent optical material and that includes a cladding surrounding the core and having a refractive index less than a refractive index of the core, at least one outer peripheral layer of the one or more outer peripheral layers containing a photosensitive material;
a stretching step of heating and stretching the optical fiber to form a narrow-diameter region having a reduced diameter and a pair of transition regions at both ends of the narrow-diameter region, a diameter of which gradually increases continuously from the narrow-diameter region; and
an exposure step of irradiating a part of the narrow-diameter region with light to cause a photoinduced refractive index change and to form a fiber Bragg grating in which a refractive index of the outer peripheral layer containing the photosensitive material periodically changes.

2. A method for producing a fiber Bragg grating element, the method comprising:
a preparation step of preparing an optical fiber having a layer structure that includes a core and a cladding surrounding the core and having a refractive index less than a refractive index of the core, the core and the cladding each containing a photosensitive material;
a stretching step of heating and stretching the optical fiber to form a narrow-diameter region having a reduced diameter and a pair of transition regions at both ends of the narrow-diameter region, a diameter of which gradually increases continuously from the narrow-diameter region; and
an exposure step of irradiating a part of the narrow-diameter region with light to cause a photoinduced refractive index change and to form a fiber Bragg grating in which a refractive index of the cladding periodically changes together with the core.

3. The method for producing a fiber Bragg grating element according to claim 2, wherein the core and the cladding contain the same photosensitive material at different concentrations, and the refractive index of the core is greater than the refractive index of the cladding due to a concentration difference of the photosensitive material.

4. The method for producing a fiber Bragg grating element according to claim 1, wherein the cladding of the optical fiber contains the photosensitive material, and the core of the optical fiber does not contain the photosensitive material.

5. The method for producing a fiber Bragg grating element according to claim 1, wherein the optical fiber contains the photosensitive material in the cladding and an outer peripheral layer other than the cladding.

6. The method for producing a fiber Bragg grating element according to claim 1, wherein the optical fiber contains the photosensitive material in the outer peripheral layer other than the cladding.

7. A fiber Bragg grating element comprising:
a tapered optical fiber having a layer structure including a core and one or more outer peripheral layers that is made of an optical material and that includes a cladding surrounding the core and having a refractive index less than a refractive index of the core, at least one outer peripheral layer of the one or more outer peripheral layers containing a photosensitive material, and a narrow-diameter region being integrally provided at one end of a transition region in which a diameter continuously and gradually decreases; and
a fiber Bragg grating formed in the narrow-diameter region and having a periodical change in refractive index of the outer peripheral layer containing the photosensitive material.

8. A fiber Bragg grating element comprising:
a tapered optical fiber having a layer structure that includes a core and a cladding surrounding the core and having a refractive index less than a refractive index of the core, the core and the cladding each being made of an optical material containing a photosensitive material, and a narrow-diameter region being integrally provided at one end of a transition region in which a diameter continuously and gradually decreases; and
a fiber Bragg grating formed in the narrow-diameter region and having a periodical change in refractive index of the cladding together with the core.

9. The fiber Bragg grating element according to claim 8, wherein the core and the cladding contain the same photosensitive material at different concentrations, and the refractive index of the core is greater than the refractive index of the cladding due to a concentration difference of the photosensitive material.

10. The fiber Bragg grating element according to claim 7, wherein the cladding is made of an optical material containing the photosensitive material, and the core is made of an optical material not containing the photosensitive material, and
the refractive index of the cladding of the fiber Bragg grating periodically changes.

11. The fiber Bragg grating element according to claim 7, wherein the cladding and an outer peripheral layer other than the cladding are made of an optical material containing the photosensitive material, and
in the fiber Bragg grating, refractive indexes of the cladding and the outer peripheral layer other than the cladding periodically change.

12. The fiber Bragg grating element according to claim 7, wherein the outer peripheral layer other than the cladding is made of an optical material containing the photosensitive material, and
in the fiber Bragg grating, a refractive index of the outer peripheral layer other than the cladding periodically changes.
